# EUROPEAN PATENT SPECIFICATION

(11) **EP 3 691 367 B1**
(45) Date of publication and mention of the grant of the patent: **13.11.2024**
(21) Application number: 17927373.5
(22) Date of filing: 29.09.2017
(51) Int. Cl.: H04W 72/04, H04W 74/08

(54) **RACH RESOURCE ALLOCATION**
RACH RESSOURCENZUWEISUNG
ALLOCATION DE RESSOURCES DE RACH

(43) Date of publication of application: 05.08.2020
(73) Proprietor: NTT DOCOMO, INC., Chiyoda-ku Tokyo 100-6150 (JP)
(72) Inventor: OHARA, Tomoya, Tokyo 100-6150 (JP); HARADA, Hiroki, Tokyo 100-6150 (JP)
(74) Representative: Hoffmann Eitle
(86) International application number: PCT/JP2017/035753
(87) International publication number: WO 2019/064604

(56) References cited:
- WO-A1-2017/160221
- US-A1- 2017 231 011
- US-B2- 9 100 929
- LG ELECTRONICS: "RACH procedure", vol. RAN WG1, no. Nagoya, Japan; 20170918 - 20170921, 17 September 2017 (2017-09-17), XP051339306, Retrieved from the Internet <URL:http://www.3gpp.org/ftp/Meetings_3GPP_SYNC/RAN1/Docs/> [retrieved on 20170917]
- MEDIATEK INC: "Remaining Details on Bandwidth Part Operation in NR", vol. RAN WG1, no. Nagoya, Japan; 20170918 - 20170921, 17 September 2017 (2017-09-17), XP051339660, Retrieved from the Internet <URL:http://www.3gpp.org/ftp/Meetings_3GPP_SYNC/RAN1/Docs/> [retrieved on 20170917]
- "3rd Generation Partnership Project; Technical Specification Group Radio Access Network; Study on New Radio Access Technology Physical Layer Aspects (Release 14)", 13 September 2017 (2017-09-13), XP051351374, Retrieved from the Internet <URL:http://www.3gpp.org/ftp/tsg_ran/WG1_RL1/DRAFT/> [retrieved on 20170913]
- HUAWEI ET AL.: "NB-PRACH design", 3GPP TSG RAN WG1 NB-IOT AD-HOC MEETING #2, R1-161812, 16 March 2016 (2016-03-16), XP051080934

## Description

### TECHNICAL FIELD

The present invention relates to a radio communication system and, more particularly, a terminal, a method by a terminal and a base station apparatus.

### BACKGROUND ART

Currently in the 3GPP (3rd Generation Partnership Project), specifications of a new radio communication system called New Radio (NR) Access Technology system have been developed, as a successor to Long-Term Evolution (LTE) system and LTE-Advanced system.

In the NR, it is assumed that, as a bandwidth part (BWP), a band position and a bandwidth are allocated on a per-user-equipment (UE) basis. Further, it is assumed that until a BWP is allocated to UE, namely, while initial access is performed, an initial active BWP is provided, for example, on a per-cell basis, and a downlink signal used for the initial access is transmitted within the initial active BWP.

The initial active BWP is assumed to have a bandwidth that is less than or equal to a minimum bandwidth that can be supported by any UE. However, details about the initial active BWP have not been determined in discussions on standardization.

US 9,100,929 B2 discloses a terminal including a generator configured to generate a request for radio network resources from a cellular network; a transmitter configured to transmit the request for radio network resources to a relay device, wherein the request for radio network resources may be configured to be forwarded by the relay device to a base station of the cellular network; and a controller configured to establish a cellular network connection between the terminal and the base station of the cellular network using radio network resources assigned to the terminal by the cellular network.

In the standard contribution entitled "RACH procedure" (R1-1715846), LG Electronics disclose details on the four-step RACH procedure. The authors proposed defining RACH resource group as a set of RACH resources sharing the same RA-RNTI and a single PRACH preamble format per cell is applied over all RACH resources at least for initial access.

US 2017/0231011 A1 discloses a method of communication for a user equipment including receiving a random access channel (RACK) configuration from a base station (an evolved nodeB (eNB)), and transmitting to the eNB a random access preamble (RAP) message in an uplink subframe of an unlicensed band matching a subframe configured as a RACH resource according to the RACK configuration.

### Prior Art Document

### [Non-Patent Document]

Non-Patent Document 1: RP-171994 TR 38.211 v1.0.0 on NR; Physical channels and modulation; for information 3GPP TSG-RAN Meeting #77 Tdoc RP-171994 Sapporo, Japan, September 11-14, 2017
Non-Patent Document 2: RP-171995 TS 38.213 v1.0.0 on NR; Physical layer procedures for control; for information 3GPPTSG-RAN Meeting #77 Sapporo, Japan, September 11-14, 2017

### SUMMARY OF THE INVENTION

### [PROBLEM TO BE SOLVED BY THE INVENTION]

Details about signaling of allocation and a frequency position of random access channel (RACH) resources for transmitting an uplink signal for initial access have not been determined. In general, resource allocation is desirable that enables flexible scheduling of various channels including a RACH, while increasing initial access occasions.

In view of the above, an object of the present invention is to provide a RACH resource allocation scheme.

### [MEANS FOR SOLVING THE PROBLEM]

In order to solve the above-described problem, the present invention provides a terminal in accordance with claim 1.

The present invention also provides a method by a terminal, in accordance with claim 10.

The present invention also provides a base station apparatus, in accordance with claim 11.

### [ADVANTAGE OF THE INVENTION]

According to the present invention, a RACH resource allocation scheme can be provided.

### BRIEF DESCRIPTION OF DRAWINGS

FIG. 1 is a schematic diagram illustrating a radio communication system according to one embodiment of the present invention;
FIG. 2 is a block diagram illustrating a functional configuration of a base station according to one embodiment of the present invention;
FIG. 3 is a diagram illustrating RACH resource allocation according to one embodiment of the present invention;
FIG. 4 is a diagram illustrating RACH resource allocation according to one embodiment of the present invention;
FIG. 5 is a diagram illustrating RACH resource allocation according to one embodiment of the present invention;
FIG. 6 is a diagram illustrating RACH resource allocation according to one embodiment of the present invention;
FIG. 7 is a diagram illustrating RACH resource allocation according to one embodiment of the present invention;
FIG. 8 is a diagram illustrating an association between SS blocks and RACH bands according to one embodiment of the present invention;
FIG. 9 is a diagram illustrating an association between SS blocks and RACH bands according to one embodiment of the present invention;
FIG. 10 is a block diagram illustrating a functional configuration of user equipment according to one embodiment of the present invention; and
FIG. 11 is a block diagram illustrating a hardware configuration of the base station and the user equipment according to one embodiment of the present invention.

### [EMBODIMENTS OF THE INVENTION]

In the following, embodiments of the invention are described with reference to the drawings.

In the following embodiments, user equipment and a base station in a radio communication system are disclosed. In the radio communication system according to the following embodiments, the base station allocates radio resources such as RACH resources for initial access in a frequency direction, and indicates the allocated radio resources to the user equipment. The user equipment uses any of the indicated radio resources to access the base station. For the NR system, a specific scheme for RACH resource arrangement has not been currently investigated. In the following embodiments, one or more RACH bands including RACH resources allocated in the frequency direction are allocated.

It is desirable to allocate RACH resources at frequency positions that are available to any user equipment. For example, if RACH resources are allocated independently of an initial active BWP for transmitting a downlink signal at initial access, (for example, if RACH resources are allocated outside the initial active BWP), there may a possibility that the user equipment fails to use the allocated RACH resources. Thus, the RACH bands may be allocated based on the initial active BWP.

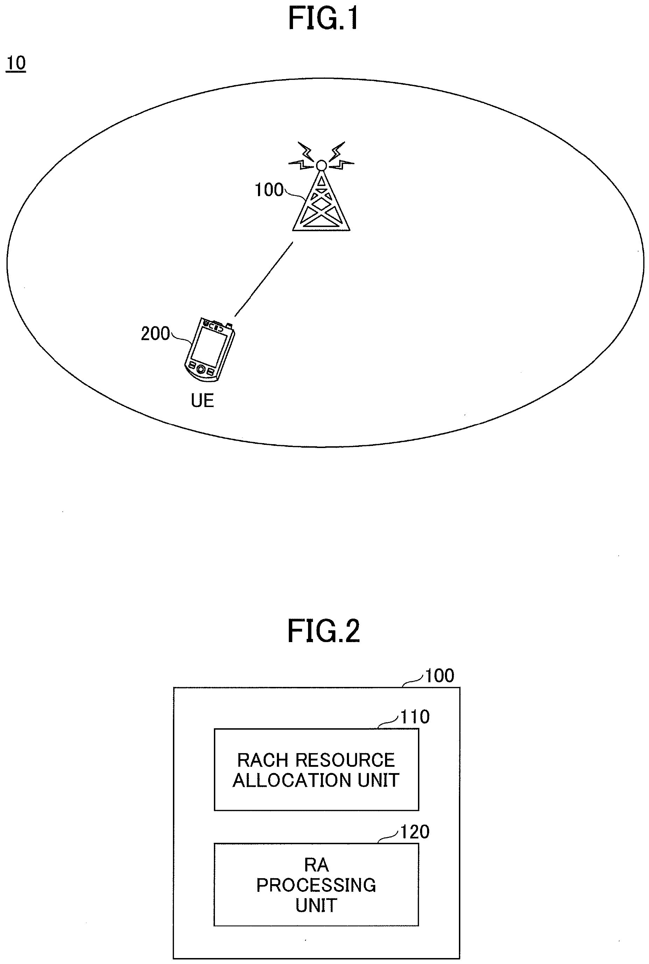

First, referring to FIG. 1, a radio communication system according to one embodiment of the present invention will be described. FIG. 1 is a schematic diagram illustrating a radio communication system according to one embodiment of the present invention.

As illustrated in FIG. 1, a radio communication system 10 includes a base station 100 and user equipment 200. Typically, the radio communication system 10 is a NR system; however, the radio communication system 10 is not limited thereto, and may be any 3GPP-compliant radio communication system defined by the 3GPP or may be a non-3GPP-compliant radio communication system.

The base station 100 performs radio communication with a number of user equipment including the user equipment 200, as controlled by an upper-level station (not illustrated) such as of a core network. In the NR system, the base station 100 may be referred to as gNB. In the illustrated embodiment, only the one base station 100 is illustrated. However, there are typically multiple base stations so as to cover a coverage range of the radio communication system 10.

The user equipment 200 is an information processing apparatus that communicatively connects to the base station 100 through a cell. The user equipment 200 may be, but is not limited thereto, a mobile phone, a smartphone, a tablet, a wearable device, and the like.

Next, referring to FIGS. 2 through 10, RACH resource allocation and a notification process according to one embodiment of the present invention will be described. FIG. 2 is a block diagram illustrating a functional configuration of the base station according to one embodiment of the present invention.

As illustrated in FIG. 2, the base station 100 includes a RACH resource allocation unit 110 and a random access (RA) processing unit 120.

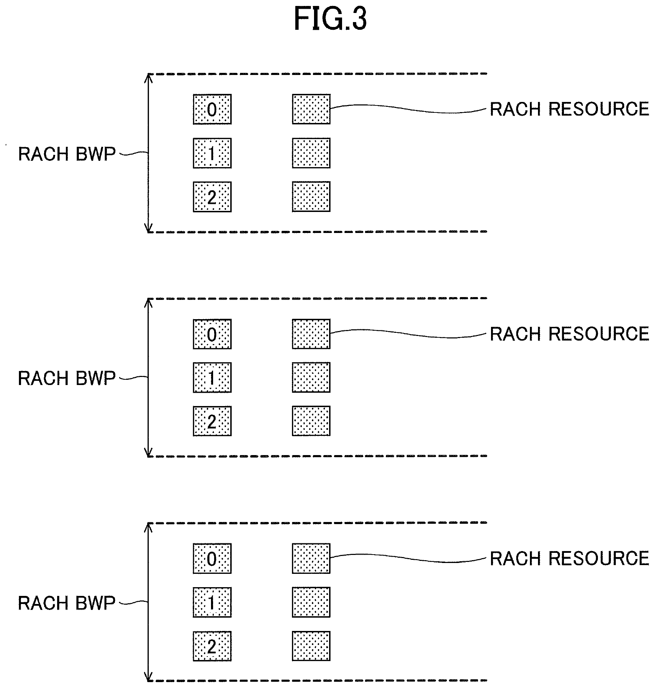

The RACH resource allocation unit 110 allocates a RACH band including RACH resources to which indices are assigned. To be more specific, as illustrated in FIG. 3, the RACH resource allocation unit 110 allocates one or more RACH bands (RACH BWPs) in the frequency direction, and allocates RACH resources within a corresponding RACH band of the RACH bands in the frequency direction. At this time, indices (such as 0, 1, and 2) are assigned to the RACH resources allocated within the RACH bands.

The RA processing unit 120 indicates frequency positions of the RACH resources to the user equipment 200. To be more specific, the RA processing unit 120 indicates, to the user equipment 200, frequency positions of the respective RACH resources, which have been allocated within the RACH bands by the RACH resource allocation unit 110. The frequency positions of the respective RACH resources within the RACH bands are indicated by radio resource control (RRC) signaling in embodiments. Alternatively, in background examples, the frequency positions of the respective RACH resources within the RACH bands may be broadcast by using system information within a cell, may be indicated by Medium Access Control (MAC), or downlink control information (DCI), or may be preliminarily defined by specifications. Further, for index assignment, patterns for assigning indices may be specified in advance in specifications, and the RA processing unit 120 may indicates an applied index assignment pattern.

At the time of initial access, the user equipment 200 starts an RA procedure by selecting any RACH resource from indicated one or more RACH bands, and transmitting a message 1 on the selected RACH resource. At this time, the user equipment 200, with respect to RACH resources of the indicated one or more RACH bands, may randomly select a RACH resource, or may select a RACH resource from a subset of RACH resources that has been extracted based on specific conditions. Alternatively, the user equipment 200 may select a RACH resource that is specified by a NW or the base station 100.

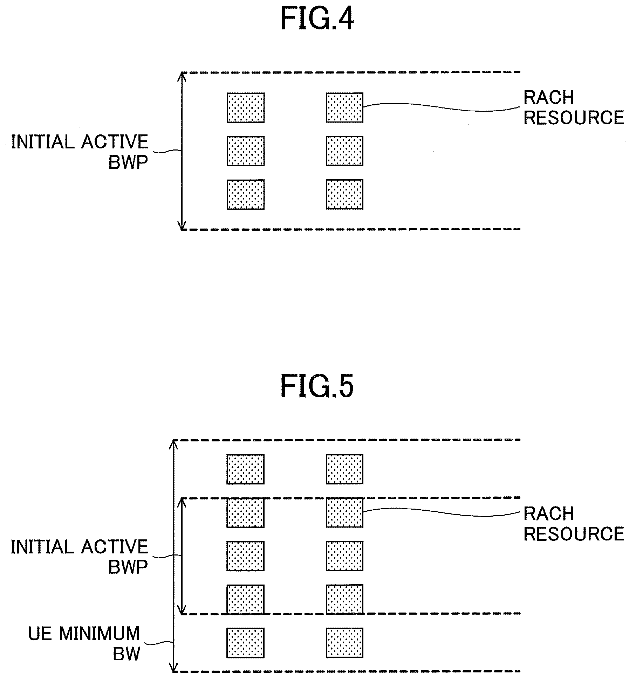

In one embodiment, the RACH resource allocation unit 110 may allocate a RACH band based on a band (for example, an initial active BWP) for transmitting a downlink signal at initial access. To be more specific, as illustrated in FIG. 4, the RACH resource allocation unit 110 may allocate RACH resources in the frequency direction in an initial active BWP, and may assign indices to the respective RACH resources in the frequency direction. The RA processing unit 120 may indicate, to the user equipment 200, frequency positions of the respective RACH resources of the RACH band allocated by the RACH resource allocation unit 110.

In one embodiment, the RACH resource allocation unit 110 may allocate a RACH band based on a relatively large band that includes the above-described band (for example, the initial active BWP) and that has a minimum bandwidth (a UE minimum BW) that is supported by the user equipment 200. To be more specific, as illustrated in FIG. 5, the RACH resource allocation unit 110 allocates RACH resources in the frequency direction, within a minimum bandwidth (a UE minimum BW) that is larger than the initial active BWP and is supported by any type of user equipment 200. Then, the RACH resource allocation unit 110 may assign indices to the respective RACH resources in the frequency direction. The RA processing unit 120 indicates frequency positions of the respective RACH resources in the RACH band allocated by the RACH resource allocation unit 110.

In the illustrated RACH band allocation, the RACH band corresponding to the UE minimum BW includes the entire initial active BWP; however, the RACH band allocation is not limited thereto. The RACH band may be allocated so as to include a part of the initial active BWP. Also, in the illustrated RACH band allocation, the center of the RACH band in the frequency direction matches the center of the initial active BWP; however, the RACH band allocation is not limited thereto. For example, the upper end or the lower end, in the frequency direction, of the RACH band corresponding to the UE minimum BW may match the upper end or the lower end of the initial active BWP. Also, the above-described positional relationship between the RACH band corresponding to the UE minimum BW and the initial active BWP may be defined by specifications, and may be indicated to the user equipment 200.

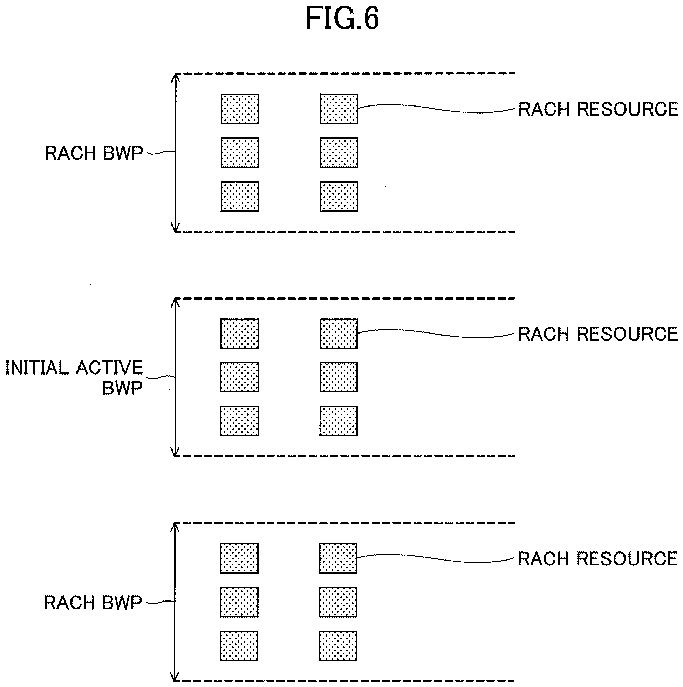

In one embodiment, the RACH resource allocation unit 110 may allocate one or more RACH bands that have the same bandwidth as that of the above-described band (for example, the initial active BWP). To be more specific, as illustrated in FIG. 6, the RACH resource allocation unit 110 may allocate RACH resources in the frequency direction, within the one or more RACH bands that have the same bandwidth as the initial active BWP, and may assign indices to the respective RACH resources. The RA processing unit 120 may indicate frequency positions of the respective RACH resources within the one or more RACH bands allocated by the RACH resource allocation unit 110.

For example, the frequency positions in each of the RACH bands may be indicated based on an offset with respect to the initial active BWP. Alternatively, the frequency positions may be indicated based on an offset with respect to a position of a synchronization signal (SS) block or a physical broadcast channel (PBCH) block (hereinafter collectively referred to as a "SS block"). Alternatively, the frequency positions may be indicated by absolute values or indices assigned within the bandwidth. Alternatively, by using an absolute radio frequency channel number (ARFCN), which is used as a reference frequency within the bands, the frequency positions may be indicated or may be defined by specifications. For example, the RA processing unit 120 indicates an ARFCN, and based on an offset (including offset 0) with respect to the indicated ARFCN, the frequency positions may be indicated or may be defined by specifications. Exemplary offsets include an offset in a high frequency direction only, in a low frequency direction only, or either in the high frequency direction or the low frequency direction from a reference position such as the initial active BWP or the synchronization signal (SS) block. Such an offset may be broadcast in system information, may be indicated by radio resource control (RRC) signaling, medium access control (MAC), or downlink control information (DCI), or may be defined by specifications. Also, the number of RACH bands in the high frequency direction and/or the low frequency direction may be indicated, or may be defined by specifications. Also, available bandwidths, band positions, and the like may be indicated.

Also, similar to index assignment to RACH resources within a reference BWP such as the initial active BWP, indices may be assigned to the frequency positions of the respective RACH resources within the RACH bands. Namely, within each of the RACH bands, the RACH resources may be allocated in one-to-one correspondence with frequency positions of RACH resources within the initial active BWP.

Also, the RA processing unit 120 may indicate, among the RACH bands including the initial active BWP, any one RACH band or multiple RACH bands to the user equipment 200. Note that the RACH bands may be indicated in association with SS blocks, which will be described later.

When multiple RACH bands have been indicated, the user equipment 200, with respect to RACH resources included in all the RACH bands, may randomly select a RACH resource, may select a RACH resource from a subset of RACH resources that has been extracted based on specific conditions, or may select a RACH resource that has been specified by the NW or the base station 100. Alternatively, the user equipment 200, with respect to RACH resources included in one or more RACH bands among all the indicated RACH bands, may randomly select a RACH resource, may select a RACH resource from a subset of RACH resources that have been extracted based on specific conditions, or may select a RACH resource that has been specified by the NW or the base station 100. For example, the user equipment 200 may select a RACH resource based on capability information (a UE capability). To be more specific, the user equipment 200 may select a RACH resource based on a bandwidth supported by the user equipment 200, for example.

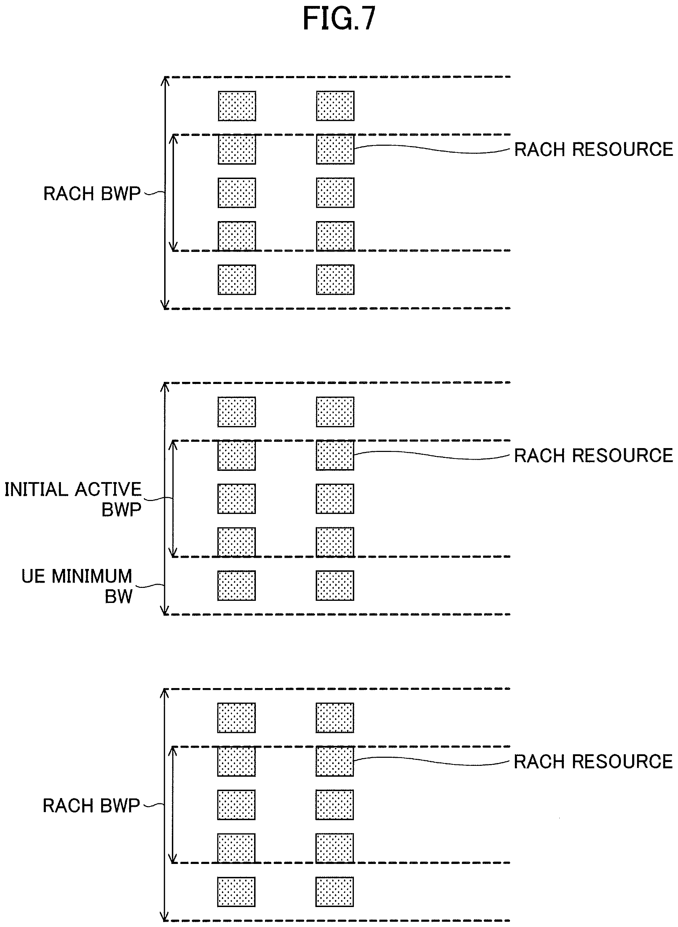

In one embodiment, the RACH resource allocation unit 110 may allocate one or more RACH bands that have the same bandwidth as that of the above-described relatively large band (UE minimum BW). To be more specific, as illustrated in FIG. 7, the RACH resource allocation unit 110 may allocate RACH resources in the frequency direction, within each of RACH bands larger than the initial active BWP and having the same bandwidth as the UE minimum BW, and may assign indices to the respective RACH resources in the frequency direction. The RA processing unit 120 may indicate, to the user equipment 200, frequency positions of the respective RACH resources within the RACH bands allocated by the RACH resource allocation unit 110.

For example, the frequency positions in each of the RACH bands may be indicated based on an offset with respect to the UE minimum BW that includes the initial active BWP. Alternatively, the frequency positions may be indicated based on an offset with respect to a position of a synchronization signal (SS) block or a physical broadcast channel (PBCH) block. Alternatively, the frequency positions may be indicated by absolute values or indices assigned within the bandwidth. Alternatively, by using an absolute radio frequency channel number (ARFCN), which is used as a reference frequency within the bands, the frequency positions may be indicated or may be defined by specifications. For example, the RA processing unit 120 indicates an ARFCN, and based on an offset (including offset 0) with respect to the indicated ARFCN, the frequency positions may be indicated or may be defined by specifications. Exemplary offsets include an offset in a high frequency direction only, in a low frequency direction only, or either in the high frequency direction or the low frequency direction from any RACH band corresponding to the UE minimum BW. Such an offset may be broadcast by system information, may be indicated by radio resource control (RRC) signaling, medium access control (MAC), or downlink control information (DCI), or may be defined by specifications.

Also, similar to index assignment to RACH resources within any reference RACH band corresponding to the UE minimum BW, indices may be assigned to the frequency positions of the respective RACH resources within the RACH bands. Namely, within each of the RACH bands, the RACH resources may be allocated in one-to-one correspondence with frequency positions of RACH resources within any reference RACH band corresponding to the UE minimum BW.

Also, the RA processing unit 120 may indicate, among the RACH bands including the UE minimum BW that includes the initial active BWP, any one RACH band or multiple RACH bands to the user equipment 200. Note that the RACH bands may be indicated in association with SS blocks, which will be described later.

The above-described "any RACH band corresponding to the UE minimum BW" may be a "UE minimum BW that includes the initial active BWP" or may be any other RACH band used as a reference.

When multiple RACH bands have been indicated, in one embodiment, the user equipment 200, with respect to RACH resources included in all the RACH bands, may randomly select a RACH resource, may select a RACH resource from a subset of RACH resources that has been extracted based on specific conditions, or may select a RACH resource that has been specified by the NW or the base station 100. In another embodiment, the user equipment 200, with respect to RACH resources included in one or more RACH bands among all the indicated RACH bands, may randomly select a RACH resource, may select a RACH resource from a subset of RACH resources that has been extracted based on specific conditions, or may select a RACH resource that has been specified by the NW or the base station 100. For example, the user equipment 200 may select a RACH resource based on capability information (a UE capability). To be more specific, the user equipment 200 may select a RACH resource based on a bandwidth supported by the user equipment 200, for example.

In one embodiment, the RA processing unit 110 receives a message 1 in a RA procedure from the user equipment 200. A frequency position at which the message 1 is transmitted may be indicated by a frequency position of a RACH resource within a RACH band or by an entire frequency band within which the RACH resource is allocated. To be more specific, as a resource position of the message 1 (a random access preamble: RAP) in the frequency direction, which is included in a random access-radio network temporary identifier (RA-RNTI) associated with the message 1, only a frequency position of a RACH resource within a RACH band may be included. Namely, it is not required to specify which RACH band is used. A cyclic redundancy check (CRC) of downlink control information (DCI) that schedules a message 2 (random access response: RAR) is scrambled with a RA-RNTI. When receiving the message 2 or when receiving control information that schedules the message 2, in order for the user equipment 200 to determine which RACH resource within a RACH band is used to transmit the message 1, the RA processing unit 120 may indicate, in an information element included in the RAR, which RACH band is used to transmit the message 1. Alternatively, the message 2 may be transmitted within the same RACH band used to transmit the message 1. Similarly, a message 4 may be transmitted within the same RACH band used to transmit the message 1. Alternatively, as a resource position of the message 1 in the frequency direction, which is included in a RA-RNTI associated with the message 1, all possible frequency positions at which the RACH resource may be allocated may be included. When a RA-RNTI is calculated, a frequency position in a RACH band and a position of the RACH band may be calculated as separate coefficients.

In embodiments, the RA processing unit 120 indicates, to the user equipment 200, association information indicating an association between synchronization signal blocks and RACH resources within RACH bands. Optionally, the RA processing unit 120 may also indicate, to the user equipment 200, association information indicating an association between synchronization signal blocks and RACH bands. The user equipment may select one or more synchronization signal (SS) blocks based on a detected synchronization signal (SS) block and its signal intensity and quality, and uses a corresponding RACH resource that can be ascertained from the association information. By making use of the association information, the base station may obtain information related to synchronization signal (SS) blocks such as appropriate downlink beams.

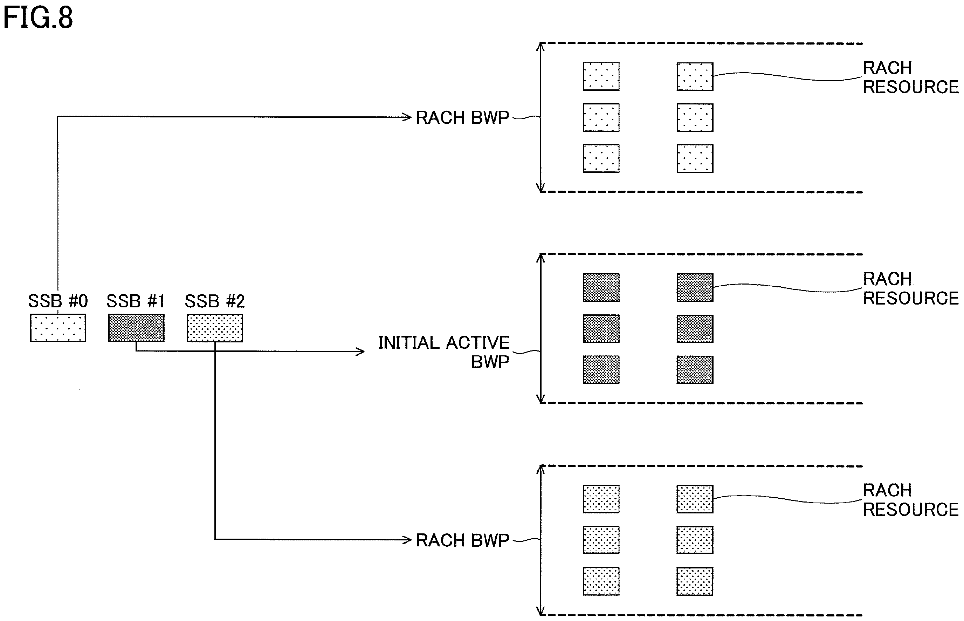

To be more specific, an association between synchronization signal (SS) blocks and RACH bands may be made as illustrated in FIG. 8, and information indicating the association may be indicated to the user equipment 200. In the illustrated specific example, RACH bands are associated with respective SS blocks. However, the present invention is not limited thereto, and RACH bands may be each associated with a plurality of SS blocks. When a RA-RNTI is calculated, SS block indices may be included or information indicating RACH bands may be included. Also, for each SS block or for a plurality of SS blocks, the number of associated RACH bands may be indicated. If the number of associated RACH bands is indicated for a plurality of SS blocks, the SS blocks may be distinguished based on an association with preamble indices. Further, the number of RACH resources, in the frequency direction, associated with one or more SS blocks may be indicated. This is because there is a possibility that RACH resources within the same RACH band may be associated with different SS blocks. Also, information indicating which SS block is associated with which RACH band or RACH resource may be implicitly indicated in accordance with a relationship between the order of SS block indices and the order or positions of RACH bands or RACH resources. Alternatively, an association relationship between SS blocks and RACH bands or RACH resources may be explicitly indicated.

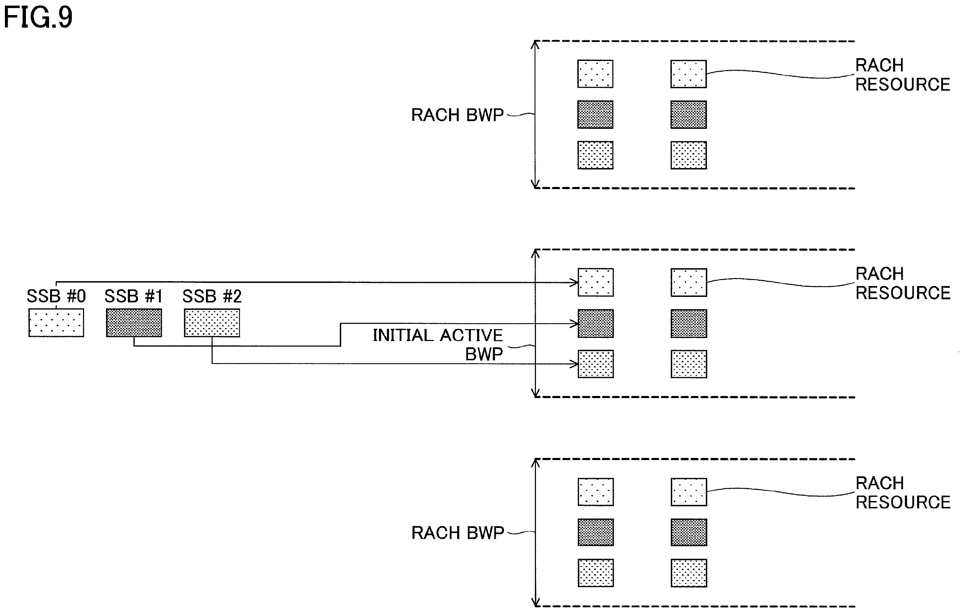

Alternatively, an association between SS blocks and RACH bands may be made as illustrated in FIG. 9, and information indicating the association may be indicated to the user equipment 200. In the illustrated specific example, the RACH resource allocation unit 110 may allocate RACH resources associated with respective SS blocks at specific frequency positions within each RACH band. Namely, RACH resources associated with all respective SS blocks may be included in each RACH band. For example, an association between SS blocks and frequency positions of RACH resources within only one RACH band may be indicated. Further, by indicating positions and/or the number of RACH bands, a common association relationship between SS blocks and frequency positions of RACH resources within a RACH band can be used. In such a case, the user equipment 200 can use RACH resources associated with all respective SS blocks by checking frequency positions of RACH resources within any one RACH band. Also, the NW or the base station 100 may allocate user equipment 200 for each RACH band or may adjust the number of RACH bands in accordance with a congestion level. In response to positions and the number of RACH bands being indicated by the NW or the base station 100, the user equipment 200 may select any RACH resource within the indicated RACH bands.

The above-described association relationship between SS blocks and RACH bands or RACH resources may be applied to all the embodiments illustrated in FIG. 3 through 7. Also, frequency positions of RACH resources, the number of RACH resources in the frequency direction, and/or intervals between RACH resources in the frequency direction may be indicated. Also, among frequency positions of RACH resources, a frequency position of a RACH resource used as a reference (the first or the last RACH resource, for example) may be indicated. Alternatively, frequency positions or indices of all RACH resources may be implicitly indicated. Also, based on the number of RACH resources in the frequency direction and/or intervals between RACH resources in the frequency direction, frequency positions of RACH resources within a RACH band may be implicitly indicated. For example, RACH resources may be allocated at equal intervals within a RACH band. Also, several patterns may be specified for associations between SS blocks and frequency positions of RACH resources within a RACH band, and an association may be indicated by an index of a corresponding pattern. For example, a pattern in which RACH resources are allocated at equal intervals, a pattern in which RACH resources are continuously arranged on a high-frequency side, and the like may be specified. Any or all of positions of, the number of, and intervals between RACH resources may be included in such patterns, and may be separately indicated.

Also, frequency positions of RACH bands, the number of RACH bands in the frequency direction, and/or intervals between RACH bands in the frequency direction may be indicated. Also, among frequency positions of RACH bands, a frequency position of a RACH band used as a reference (the first or the last RACH band, for example) may be indicated. Alternatively, frequency positions or indices of all RACH band may be implicitly indicated. Also, based on the number of RACH bands in the frequency direction and/or intervals between RACH bands in the frequency direction, frequency positions of RACH bands within a frequency band may be implicitly indicated. For example, RACH bands may be allocated at equal intervals within a frequency band. Also, several patterns may be specified for associations between SS blocks and frequency positions of RACH bands within a frequency band, and an association may be indicated by an index of a corresponding pattern. For example, a pattern in which RACH bands are allocated at equal intervals and a pattern in which RACH bands are continuously arranged on a high-frequency side may be specified. Any or all of positions of, the number of, and intervals between RACH bands may be included in such patterns, and may be separately indicated.

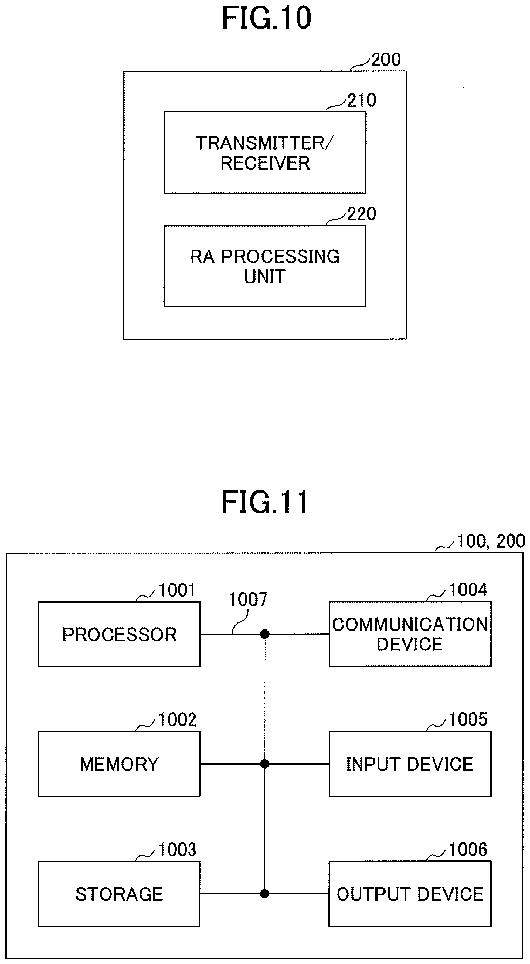

FIG. 10 is a block diagram illustrating a functional configuration of the user equipment according to one embodiment. As illustrated in FIG. 10, the user equipment 200 includes a transmitter/receiver 210 and a RA processing unit 220.

The transmitter/receiver 210 transmits /receives a radio signal to/from the base station 100. To be more specific, the transmitter/receiver 210 transmits/receives various types of downlink signals and/or uplink signals to/from the base station 100. For example, the downlink signals include a downlink data signal and a downlink control signal, and the uplink signals include an uplink data signal and an uplink control signal.

The RA processing unit 220 performs a RA procedure. To be more specific, the RA processing unit 220 performs a RA procedure on a RACH resource, which has been selected from RACH resources that are included in a RACH band and to which indices are assigned in the frequency direction. At the time of initial access, the processing unit 220 starts a RA procedure by selecting one or more RACH resources from RACH resources included in one or more indicated RACH bands, and transmitting a message 1 on the selected RACH resource. The RA processing unit 220, with respect to RACH resources included in one or more indicated RACH bands, may randomly select any RACH resource, or may select any RACH resource from a subset of RACH resources that has been extracted based on specific conditions. Alternatively, the RA processing unit 220 may select a RACH resource included in RACH bands based on a bandwidth supported by the user equipment 200.

The block diagrams used in the above description of the embodiments illustrate functional unit blocks. These functional blocks (components) are implemented in any combination of hardware and/or software items. Also, means for implementing the functional blocks are not particularly limited. In other words, the functional blocks may be implemented in one physically and/or logically coupled device or in multiple devices where two or more physically and/or logically separated devices are connected directly and/or indirectly (for example, in wired and/or wireless manners).

For example, the base station 100 and the user equipment 200 according to one embodiment may function as a computer that performs processes related to a radio communication method. FIG. 11 is a block diagram illustrating a hardware configuration of the base station 100 and the user equipment 200 according to one embodiment. The above-described base station 100 and the user equipment 200 may each be physically configured as a computer including a processor 1001, a memory 1002, storage 1003, a communication device 1004, an input device 1005, an output device 1006, and a bus 1007.

In the following description, the term "apparatus" can be interchangeably read as a circuit, a device, a unit or the like. The hardware configuration of the base station 100 and the user equipment 200 may each be configured so as to include the illustrated one or more devices or so as not to include a part of the devices.

Functions of the base station 100 and the user equipment 200 are implemented by causing hardware such as the processor 1001 and the memory 1002 to read predetermined software (a program) so as to allow the processor 1001 to execute operations, communicate with the communication device 1004, and control reading and/or writing data from/into the memory 1002 and the storage 1003.

The processor 1001 controls the whole computer by, for example, running an operating system. The processor 1001 may be configured by a central processing unit (CPU) including an interface with a peripheral device, a control device, an arithmetic device, and a register. For example, the above-mentioned components may be implemented by the processor 1001.

Also, the processor 1001 loads programs (program codes), software modules, and data from the storage 1003 and/or the communication device 1004 into the memory 1002, and executes various processes in accordance therewith. Examples of the programs include a program for causing the computer to execute at least a part of operations described in the above embodiments. For example, processes performed by the components of the base station 100 and the user equipment 200 may be implemented by control programs stored in the memory 1002 and executed by the processor 1001. Other functional blocks may be similarly implemented. Although an example in which the various types of processes are performed by the single processor 1001 has been described above, the processes may be simultaneously or sequentially performed by two or more processors 1001. The processor 1001 may be implemented with one or more chips. Note that the programs may be transmitted from a network via an electric communication line.

The memory 1002 is a computer-readable recording medium, and may include at least one of read-only memory (ROM), erasable programmable ROM (EPROM), an electrically erasable programmable ROM (EEPROM), and random-access memory (RAM), for example. The memory 1002 may be referred to as a register, a cache, or a main memory (a main storage device). The memory 1002 can store, for example, programs (program codes) and software modules that can be executed so as to perform the radio communication method according to one embodiment.

The storage 1003 is a computer-readable recording medium and, may include at least one of an optical disc such as a compact disc read-only memory (CD-ROM), a hard disk drive, a flexible disk, a magnetic optical disc (such as a compact disc, a digital versatile disc and a Blu-ray (registered trademark) disk), a smart card, flash memory (such as a card, a stick, and a key drive), a floppy (registered trademark) disk, and a magnetic strip. The storage 1003 may be referred to as an auxiliary storage device. The above-described recording medium may be a database or a server including the memory 1002 and/or the storage 1003, or may be any other appropriate medium.

The communication device 1004 is hardware (a transmitting/receiving device) that performs communication between computers via a wired and/or wireless network, and may be referred to as a network device, a network controller, a network card, or a communication module. For example, the above-described components may be implemented by the communication device 1004.

The input device 1005 is an input device (such as a keyboard, a mouse, a microphone, a switch, a button, or a sensor) that receives inputs from the outside. The output device 1006 is an output device (such as a display, a speaker, or a LED ramp) that provides outputs to the outside. Note that the input device 1005 and the output device 1006 may be an integrated device (for example, a touch panel).

Also, the devices such as the processor 1001 and the memory 1002 are connected with each other via the bus 1007 that communicates information. The bus 1007 may be a single bus or may be different buses for different devices.

Also, the base station 100 and the user equipment 200 may be configured to include hardware such as a macro processor, a digital signal processor (DSP), an application-specific integrated circuit (ASIC), a programmable logic device (PLD), and a field-programmable gate array (FPGA), and a part or all of the functional blocks may be implemented by the hardware. For example, the processor 1001 may include at least one of these hardware devices.

Notification of information is not limited to the aspects/embodiments described herein and may be performed in any other manner. For example, information may be indicated through physical layer signaling (for example, downlink control information (DCI) and uplink control information (UCI)), higher layer signaling (for example, radio resource control (RRC) signaling, medium access control (MAC) signaling, broadcast information (master information block (MIB), and system information block (SIB))), any other signal, or a combination thereof. Also, the RRC signaling may be referred to as an RRC message, and may be an RRC connection setup message or an RRC connection reconfiguration message.

The aspects/embodiments disclosed herein may be applied to systems that utilize Long-Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, UWB (ultra-wideband), Bluetooth (registered trademark), or any other appropriate system, and/or next-generation systems enhanced based on the above systems.

The orders of procedures, sequences, and flowcharts of the aspects/embodiments described herein may be changed, as long as no contradiction occurs. For example, in methods described herein, various steps are presented in an exemplary order, and are not limited to a specific order presented.

Certain operations described as being performed by the base station 100 may be performed by its upper node, in some cases. In a network including one or more network nodes having a base station, it is apparent that various operations performed for communication with terminals may be performed by the base station and/or a network node other than the base station (for example, a mobility management entity (MME) or a serving-gateway (S-GW) may be assumed, but the network node is not limited thereto). Although an example in which a single network node other than the base station is used has been described, multiple other network nodes (for example, MMEs and S-GWs) may be used in combination.

Information may be output from a higher layer (or a lower layer) to a lower layer (or a higher layer). Information may also be input and output via a plurality of network nodes.

Information that has been input or output may be stored in a certain location (such as a memory) or may be managed in a management table. The information that has been input or output may be overwritten, updated, or additionally written thereto. The information that has been output may be deleted. The information that has been input may be transmitted to other devices.

Determination may be made with a one-bit value (0 or 1), a Boolean value (true or false), or numerical comparison (comparison with a predetermined value).

The aspects/embodiments described herein may be used alone or in combination, or may be switched at the time of execution. Also, indication of predetermined information (for example, indicating that "it is X") is not limited to an explicit manner, and may be performed implicitly (for example, the predetermined information is not indicated).

Although the present invention has been described in detail, it will be apparent for those skilled in the art that the present invention is not limited to the embodiments described herein. Various modifications and variations may be made without departing from the scope of the present invention. Accordingly, the description herein is for the purpose of describing the embodiments, and is not intended to have any restrictive meaning to the present invention.

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, or a function, regardless of whether the software is referred to as software, firmware, middleware, microcode, a hardware description language, or any other name.

Also, software, an instruction, and the like may be transmitted and received via a transmission medium. For example, if the software is transmitted from a website, a server, or other remote sources by using wired techniques such as a coaxial cable, an optical fiber cable, a twist pair and a digital subscriber line (DSL) and/or wireless techniques such as infrared, radio, and microwaves, these wired techniques and/or wireless techniques are included within the definition of a transmission medium.

Information, signals, and the like as described herein may be represented with use of any of various different techniques. For example, data, an instruction, a command, information, a signal, a bit, a symbol, and a chip that may be referred to throughout the above description may be represented by a voltage, a current, an electromagnetic wave, a magnetic field, a magnetic particle, an optical field, a photon, or any combination thereof.

Terms described herein and/or terms necessary to understand the present specification may be replaced with terms having the same or similar meanings. For example, a channel and/or a symbol may be a signal. Also, the signal may be a message. Also, a component carrier (CC) may be referred to as a carrier frequency or a cell, for example.

As used herein, the terms "system" and "network" are interchangeably used.

Also, information, parameters, and the like as described herein may be represented as absolute values, relative values from predetermined values, or other corresponding information. For example, a radio resource may be specified by an index.

Names used for the above-described parameters are not intended to be restrictive in any way. Further, there may be a case where formulas using these parameters may be different from those explicitly disclosed herein. Various channels (such as a PUCCH and PDCCH) and information elements (such as TPC) can be identified with any names, and names assigned to these various channels and information elements are not intended to be restrictive in any way.

A base station can accommodate one or more (three, for example) cells (also referred to as sectors). If the base station accommodates multiple cells, the whole coverage area of the base station can be segmented into multiple smaller areas, and the smaller areas can each provide a communication service by using a base station subsystem (such as a remote radio head (RRH), which is an indoor small base station). The term "cell" or "sector" refers to a part of or the entirety of the coverage area of a base station and/or a base station subsystem providing a communication service in this coverage. Further, the terms "base station", "eNB", "cell", and "sector" may be interchangeably used herein. The base station may be referred to as a fixed station, NodeB, eNodeB (eNB), an access point, a femtocell, or a small cell.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate term.

As used herein, the term "determining" may include various operations. For example, the term "determining" may include determining that calculating, computing, processing, deriving, investigating, looking up (for example, looking up a table, a database, or any other data structure), or ascertaining is considered to be performed. Also, the term "determining" may include determining that receiving (for example, receiving information), transmitting (for example, transmitting information), inputting, outputting, or accessing (for example, accessing data in a memory) is considered to be performed. Also, the term "determining" may include determining that resolving, selecting, choosing, establishing, or comparing is considered to be performed. Namely, the "determining" may include determining that any operation is considered to be performed.

The terms "connected", "coupled", and any variation thereof mean direct or indirect connection or coupling between two or more elements, and can include one or more intermediate elements existing between two mutually "connected" or "coupled" elements. The coupling or connection between elements may be physical, logical, or in combinations thereof. As used herein, two elements can be considered to be mutually "connected" or "coupled" with use of one or more electric wires, cables, and/or printed electric connections, and as several non-limiting and non-comprehensive examples, with use of electromagnetic energy such as electromagnetic energy having wavelengths of a radio frequency region, a microwave region, and (both visible and invisible) light regions.

A reference signal can be abbreviated to RS, and may be referred to as a pilot in accordance with applied standards.

As used herein, the term "based on" does not mean "based only on", unless otherwise specified. In other words, the term "based on" means both "based only on" and "based at least on".

Any reference to elements that use terms such as "first" and "second" used herein does not limit the amount or order of these elements in general. These terms can be used herein so as to conveniently distinguish between two or more elements. Accordingly, the reference to the first and second elements does not mean that only the two elements are employed or does not mean that the first element is required to precede the second element in any fashion.

The term "means" used in a configuration of each apparatus as described above may be replaced with "unit", "circuit", "device", or the like.

As long as the terms "include", "including", and any variation thereof are used in the present specification or in the claims, these terms are intended to be inclusive similar to the term "comprising". Further, the term "or" used in the present specification or in the claims is intended not to be "exclusive or".

A radio frame may be configured by one or more frames in a time domain. In the time domain, the one or more frames may be referred to as subframes. Further, the subframes may each be configured by one or more slots in the time domain. Further, the slots may each be configured by one or more symbols (such as OFDM symbols and SC-FDMA symbols) in the time domain. Such a radio frame, a subframe, a slot, and a symbol each represent a time unit for transmitting a signal. The radio frame, the subframe, the slot, and the symbol each may be referred to as another name. For example, in a LTE system, a base station schedules allocation of radio resources (such as frequency bandwidths and transmission power available to each mobile station) to each of the mobile stations. The minimum time unit for scheduling may be referred to as a transmission time interval (TTI). For example, one subframe, multiple successive subframes, or one slot may be referred to as a TTI. A resource block (RB) may be a resource allocation unit in a time domain and a frequency domain, and may include one or more successive subcarriers in the frequency domain. Also, in the time domain, the resource block may include one or more symbols, and may be of one slot, one subframe, or one TTI in length. One TTI and one subframe may each be configured by one or more resource blocks. The above-described radio frame configuration is merely exemplary, and the number of subframes included in a radio frame, the number of slots included in a subframe, the number of symbols and resource blocks included in a slot, and the number of subcarriers included in a resource block can be changed in any manner.

Although the embodiments of the present invention have been described in detail, the present invention is not limited to the above-described embodiments. Various variations and modifications may be made without departing from the scope of the present invention described in the claims.

### LIST OF REFERENCE SYMBOLS

- 10: radio communication system
- 100: base station
- 200: user equipment

## Claims

1. A terminal (200) comprising:
a receiving unit (210) configured to receive, from a base station apparatus (100), RRC signaling including, for each of a plurality of BWPs, information on one or more frequency positions of one or more RACH resources and information on a number of the one or more RACH resources in a frequency direction; and
a processing unit (220) configured to identify, based on the RRC signaling, a RACH resource for transmitting a random access preamble; and
a transmitting unit configured to transmit the random access preamble to the base station apparatus (100),
wherein the receiving unit (210) is configured to receive, for each of the plurality of BWPs, information indicating association between a RACH resource and a synchronization signal block,
wherein the information indicating the association is included in the RRC signaling, and
wherein the synchronization signal block detected by the receiving unit (210) is mapped to the RACH resource located in the frequency direction based on the information indicating the association.

2. The terminal (200) according to claim 1, wherein the information on the one or more frequency positions of the one or more RACH resources indicates a frequency position of a RACH resource that is a reference.

3. The terminal (200) according to claim 1 or 2, wherein the receiving unit (210) is configured to receive a response to the random access preamble based on a RA-RNTI that is associated with a frequency position of the RACH resource in the BWP to which the random access preamble is mapped.

4. The terminal (200) according to any one of claims 1 to 3, wherein the RRC signaling includes information on a frequency position and a bandwidth of each of a plurality of BWP, and
wherein the processing unit (220) is configured to identify a frequency position and a bandwidth of a BWP for transmitting the random access preamble based on the RRC signaling.

5. The terminal (200) according to any one of claims 1 to 4, wherein the receiving unit (210) is configured to receive the RRC signaling corresponding to each of a plurality of BWPs including a first BWP for initial access, and
wherein the processing unit (220) is configured to determine a BWP for transmitting the random access preamble from the plurality of BWPs based on the first BWP.

6. The terminal (200) according to claim 5, wherein the BWP for transmitting the random access preamble is the first BWP for the initial access.

7. The terminal (200) according to any one of claims 1 to 6, wherein the receiving unit (210) is configured to receive the RRC signaling corresponds to each of a plurality of BWPs including a first BWP for initial access, and
wherein, by the RRC signaling, one or more BWPs are configured, each having a bandwidth that is the same as that of the first BWP.

8. The terminal (200) according to any one of claims 1 to 7, wherein the receiving unit (210) is configured to receive the RRC signaling corresponding to each of a plurality of BWPs including a first BWP for initial access, and
wherein, by the RRC signaling, one or more BWPs are configured, each having a bandwidth that differs from that of the first BWP.

9. The terminal (200) according to any one of claims 1 to 8, wherein the receiving unit (210) is configured to receive the RRC signaling corresponding to each of a plurality of BWPs including a first BWP for initial access, and
wherein, by the RRC signaling, one or more BWPs are configured, each having a bandwidth including the first BWP.

10. A method by a terminal (200), the method comprising:
a step of receiving, from a base station apparatus (100), RRC signaling including, for each of a plurality of BWPs, information on one or more frequency positions of one or more RACH resources and information on a number of the one or more RACH resources in a frequency direction; and
a step of identifying, based on the RRC signaling, a RACH resource for transmitting a random access preamble; and
a step transmitting the random access preamble to the base station apparatus (100),
wherein the step of receiving receives, for each of the plurality of BWPs, information indicating association between a RACH resource and a synchronization signal block,
wherein the information indicating the association is included in the RRC signaling, and
wherein the synchronization signal block detected by the step of receiving is mapped to the RACH resource located in the frequency direction based on the information indicating the association.

11. A base station apparatus (100) comprising:
a transmitting unit configured to transmit RRC signaling including, for each of a plurality of BWPs, information on one or more frequency positions of one or more RACH resources and information on a number of the one or more RACH resources in a frequency direction; and
a receiving unit configured to receive, from a terminal (200), a random access preamble that is transmitted in a RACH resource identified by the terminal (200) based on the RRC signaling,
wherein the transmitting unit is configured to transmit, for each of the plurality of BWPs, information indicating association between a RACH resource and a synchronization signal block,
wherein the information indicating the association is included in the RRC signaling, and
wherein the synchronization signal block is mapped to the RACH resource located in the frequency direction based on the information indicating the association.

## Patentansprüche

1. Endgerät (200), umfassend:
eine Empfangseinheit (210), die so konfiguriert ist, dass sie von einer Basisstationsvorrichtung (100) eine RRC-Signalisierung empfängt, die für jeden von einer Vielzahl von BWPs
Informationen über eine oder mehrere Frequenzpositionen von einer oder mehreren RACH-Ressourcen und Informationen über eine Anzahl der einen oder mehreren RACH-Ressourcen in einer Frequenzrichtung einschließt; und
eine Verarbeitungseinheit (220), die so konfiguriert ist, dass sie auf der Grundlage der RRC-Signalisierung eine RACH-Ressource zum Übertragen einer Zufallszugriffspräambel identifiziert; und
eine Übertragungseinheit, die so konfiguriert ist, dass sie die Zufallszugriffspräambel an die Basisstationsvorrichtung (100) überträgt,
wobei die Empfangseinheit (210) so konfiguriert ist, dass sie für jede der Vielzahl von BWPs Informationen empfängt, die eine Zuordnung zwischen einer RACH-Ressource und einem Synchronisationssignalblock anzeigen,
wobei die Informationen, die die Zuordnung anzeigen, in der RRC-Signalisierung eingeschlossen sind, und
wobei der von der Empfangseinheit (210) detektierte Synchronisationssignalblock auf der Grundlage der die Zuordnung anzeigenden Informationen auf die RACH-Ressource abgebildet wird, die sich in der Frequenzrichtung befindet.

2. Endgerät (200) nach Anspruch 1, wobei die Informationen über die eine oder mehreren Frequenzpositionen der einen oder mehreren RACH-Ressourcen eine Frequenzposition einer RACH-Ressource anzeigen, die eine Referenz ist.

3. Endgerät (200) nach Anspruch 1 oder 2, wobei die Empfangseinheit (210) so konfiguriert ist, dass sie eine Antwort auf die Zufallszugriffspräambel auf der Grundlage eines RA-RNTI empfängt, der einer Frequenzposition der RACH-Ressource in dem BWP zugeordnet ist, auf die die Zufallszugriffspräambel abgebildet ist.

4. Endgerät (200) nach einem der Ansprüche 1 bis 3, wobei die RRC-Signalisierung Informationen über eine Frequenzposition und eine Bandbreite von jedem von einer Vielzahl von BWPs einschließt, und
wobei die Verarbeitungseinheit (220) so konfiguriert ist, dass sie eine Frequenzposition und eine Bandbreite eines BWP zum Übertragen der Zufallszugriffspräambel auf der Grundlage der RRC-Signalisierung identifiziert.

5. Endgerät (200) nach einem der Ansprüche 1 bis 4, wobei die Empfangseinheit (210) so konfiguriert ist, dass sie die RRC-Signalisierung empfängt, die jedem aus einer Vielzahl von BWPs einschließlich eines ersten BWPs für einen Erstzugriff entspricht, und
wobei die Verarbeitungseinheit (220) so konfiguriert ist, dass sie einen BWP zum Übertragen der Zufallszugriffspräambel aus der Vielzahl von BWPs auf der Grundlage des ersten BWP bestimmt.

6. Endgerät (200) nach Anspruch 5, wobei der BWP zum Übertragen der Zufallszugriffspräambel der erste BWP für den Erstzugriff ist.

7. Endgerät (200) nach einem der Ansprüche 1 bis 6, wobei die Empfangseinheit (210) so konfiguriert ist, dass sie die RRC-Signalisierung empfängt, die jeder von einer Vielzahl von BWPs einschließlich eines ersten BWPs für einen Erstzugriff entspricht, und
wobei durch die RRC-Signalisierung ein oder mehrere BWPs konfiguriert werden, die jeweils eine Bandbreite aufweisen, die die gleiche ist wie die des ersten BWP.

8. Endgerät (200) nach einem der Ansprüche 1 bis 7, wobei die Empfangseinheit (210) so konfiguriert ist, dass sie die RRC-Signalisierung empfängt, die jedem aus einer Vielzahl von BWPs einschließlich eines ersten BWPs für einen Erstzugriff entspricht, und
wobei durch die RRC-Signalisierung ein oder mehrere BWPs konfiguriert werden, die jeweils eine Bandbreite aufweisen, die sich von der des ersten BWP unterscheidet.

9. Endgerät (200) nach einem der Ansprüche 1 bis 8, wobei die Empfangseinheit (210) so konfiguriert ist, dass sie die RRC-Signalisierung empfängt, die jedem aus einer Vielzahl von BWPs einschließlich eines ersten BWPs für einen Erstzugriff entspricht, und
wobei durch die RRC-Signalisierung ein oder mehrere BWPs konfiguriert werden, die jeweils eine Bandbreite aufweisen, die den ersten BWP einschließt.

10. Verfahren durch ein Endgerät (200), wobei das Verfahren umfasst:
einen Schritt des Empfangens, von einer Basisstationsvorrichtung (100), einer RRC-Signalisierung, die für jeden von einer Vielzahl von BWPs Informationen über eine oder mehrere Frequenzpositionen einer oder mehrerer RACH-Ressourcen und Informationen über eine Anzahl der einen oder mehreren RACH-Ressourcen in einer Frequenzrichtung einschließt; und
einen Schritt des Identifizierens, auf der Grundlage der RRC-Signalisierung, einer RACH-Ressource zum Übertragen einer Zufallszugriffspräambel; und
einen Schritt des Übertragens der Zufallszugriffspräambel an die Basisstationsvorrichtung (100),
wobei der Schritt des Empfangens für jede der Vielzahl von BWPs Informationen empfängt, die eine Zuordnung zwischen einer RACH-Ressource und einem Synchronisationssignalblock anzeigen, wobei die Informationen, die die Zuordnung anzeigen, in der RRC-Signalisierung eingeschlossen sind, und
wobei der durch den Empfangsschritt detektierte Synchronisationssignalblock auf der Grundlage der Informationen, die die Zuordnung anzeigen, auf die RACH-Ressource abgebildet wird, die sich in der Frequenzrichtung befindet.

11. Basisstationsvorrichtung (100), die umfasst:
eine Übertragungseinheit, die so konfiguriert ist, dass sie eine RRC-Signalisierung überträgt, die für jeden von einer Vielzahl von BWPs Informationen über eine oder mehrere Frequenzpositionen einer oder mehrerer RACH-Ressourcen und Informationen über eine Anzahl der einen oder mehreren RACH-Ressourcen in einer Frequenzrichtung einschließt; und
eine Empfangseinheit, die so konfiguriert ist, dass sie von einem Endgerät (200) eine Zufallszugriffspräambel empfängt, die in einer von dem Endgerät (200) auf der Grundlage der RRC-Signalisierung identifizierten RACH-Ressource übertragen wird,
wobei die Übertragungseinheit so konfiguriert ist, dass sie für jeden der Vielzahl von BWPs Informationen überträgt, die eine Zuordnung zwischen einer RACH-Ressource und einem Synchronisationssignalblock anzeigen,
wobei die Informationen, die die Zuordnung anzeigen, in der RRC-Signalisierung eingeschlossen sind, und
wobei der Synchronisationssignalblock auf der Grundlage der Informationen, die die Zuordnung anzeigen, auf die RACH-Ressource abgebildet wird, die sich in der Frequenzrichtung befindet.

## Revendications

1. Terminal (200) comprenant :
une unité de réception (210) configurée pour recevoir, en provenance d'un appareil (100) de station de base, une signalisation RRC incluant, pour chacune d'une pluralité de BWP,
des informations concernant une ou plusieurs positions de fréquence d'une ou plusieurs ressources RACH et des informations concernant un nombre des une ou plusieurs ressources RACH dans une direction de fréquence ; et
une unité de traitement (220) configurée pour identifier, sur la base de la signalisation RRC, une ressource RACH pour transmettre un préambule d'accès aléatoire ; et
une unité de transmission configurée pour transmettre le préambule d'accès aléatoire à l'appareil (100) de station de base,
dans lequel l'unité de réception (210) est configurée pour recevoir, pour chacune de la pluralité de BWP, des informations indiquant une association entre une ressource RACH et un bloc de signal de synchronisation,
dans lequel les informations indiquant l'association sont incluses dans la signalisation RRC, et
dans lequel le bloc de signal de synchronisation détecté par l'unité de réception (210) est mappé sur la ressource RACH située dans la direction de fréquence sur la base des informations indiquant l'association.

2. Terminal (200) selon la revendication 1, dans lequel les informations concernant les une ou plusieurs positions de fréquence des une ou plusieurs ressources RACH indiquent une position de fréquence d'une ressource RACH qui est une référence.

3. Terminal (200) selon la revendication 1 ou la revendication 2, dans lequel l'unité de réception (210) est configurée pour recevoir une réponse au préambule d'accès aléatoire sur la base d'un RA-RNTI qui est associé à une position de fréquence de la ressource RACH dans la BWP sur laquelle est mappé le préambule d'accès aléatoire.

4. Terminal (200) selon l'une quelconque des revendications 1 à 3, dans lequel la signalisation RRC inclut des informations concernant une position de fréquence et une bande passante de chacune d'une pluralité de BWP, et
dans lequel l'unité de traitement (220) est configurée pour identifier une position de fréquence et une bande passante d'une BWP pour transmettre le préambule d'accès aléatoire sur la base de la signalisation RRC.

5. Terminal (200) selon l'une quelconque des revendications 1 à 4, dans lequel l'unité de réception (210) est configurée pour recevoir la signalisation RRC correspondant à chacune d'une pluralité de BWP incluant une première BWP pour accès initial, et
dans lequel l'unité de traitement (220) est configurée pour déterminer une BWP pour transmettre le préambule d'accès aléatoire depuis la pluralité de BWP sur la base de la première BWP.

6. Terminal (200) selon la revendication 5, dans lequel la BWP pour transmettre le préambule d'accès aléatoire est la première BWP pour l'accès initial.

7. Terminal (200) selon l'une quelconque des revendications 1 à 6, dans lequel l'unité de réception (210) est configurée pour recevoir la signalisation RRC correspondant à chacune d'une pluralité de BWP incluant une première BWP pour accès initial, et
dans lequel, par la signalisation RRC, une ou plusieurs BWP sont configurées, chacune présentant une bande passante qui est identique à celle de la première BWP.

8. Terminal (200) selon l'une quelconque des revendications 1 à 7, dans lequel l'unité de réception (210) est configurée pour recevoir la signalisation RRC correspondant à chacune d'une pluralité de BWP incluant une première BWP pour accès initial, et
dans lequel, par la signalisation RRC, une ou plusieurs BWP sont configurées, chacune présentant une bande passante qui diffère de celle de la première BWP.

9. Terminal (200) selon l'une quelconque des revendications 1 à 8, dans lequel l'unité de réception (210) est configurée pour recevoir la signalisation RRC correspondant à chacune d'une pluralité de BWP incluant une première BWP pour accès initial, et
dans lequel, par la signalisation RRC, une ou plusieurs BWP sont configurées, chacune présentant une bande passante incluant la première BWP.

10. Procédé par un terminal (200), le procédé comprenant :
une étape consistant à recevoir, en provenance d'un appareil (100) de station de base, une signalisation RRC incluant, pour chacune d'une pluralité de BWP, des informations concernant une ou plusieurs positions de fréquence d'une ou plusieurs ressources RACH et des informations concernant un nombre des une ou plusieurs ressources RACH dans une direction de fréquence ; et
une étape consistant à identifier, sur la base de la signalisation RRC, une ressource RACH pour transmettre un préambule d'accès aléatoire ; et
une étape transmettant le préambule d'accès aléatoire à l'appareil (100) de station de base,
dans lequel l'étape de réception reçoit, pour chacune de la pluralité de BWP, des informations indiquant une association entre une ressource RACH et un bloc de signal de synchronisation, dans lequel les informations indiquant l'association sont incluses dans la signalisation RRC, et
dans lequel le bloc de signal de synchronisation détecté par l'étape de réception est mappé sur la ressource RACH située dans la direction de fréquence sur la base des informations indiquant l'association.

11. Appareil (100) de station de base comprenant :
une unité de transmission configurée pour transmettre une signalisation RRC incluant, pour chacune d'une pluralité de BWP, des informations concernant une ou plusieurs positions de fréquence d'une ou plusieurs ressources RACH et des informations concernant un nombre des une ou plusieurs ressources RACH dans une direction de fréquence ; et
une unité de réception configurée pour recevoir, en provenance d'un terminal (200), un préambule d'accès aléatoire qui est transmis dans une ressource RACH identifiée par le terminal (200) sur la base de la signalisation RRC,
dans lequel l'unité de transmission est configurée pour transmettre, pour chacune de la pluralité de BWP, des informations indiquant une association entre une ressource RACH et un bloc de signal de synchronisation,
dans lequel les informations indiquant l'association sont incluses dans la signalisation RRC, et
dans lequel le bloc de signal de synchronisation est mappé sur la ressource RACH située dans la direction de fréquence sur la base des informations indiquant l'association.
